# EUROPEAN PATENT APPLICATION

(11) **EP 2 763 399 A2**
(43) Date of publication of application: **06.08.2014**
(21) Application number: 14152056.9
(22) Date of filing: 22.01.2014
(51) Int. Cl.: H04N 5/357, H04N 5/378, H04N 5/372

(54) **Solid-state image capture device and drive method therefor**

(30) Priority: 30.01.2013 JP 2013015100
(71) Applicant: Sony Corporation, Tokyo 108-0075 (JP)
(72) Inventor: Nomiyama, Yo, Minato-ku, Tokyo 108-0075 (JP); Masuzawa, Tsuyoshi, Minato-ku, Tokyo 108-0075 (JP); Nishioka, Kazuaki, Minato-ku, Tokyo 108-0075 (JP)
(74) Representative: Meldrum, David James

(57) **Abstract**

A solid-state image capture device includes: a solid-state imaging element having output portions configured to output signals read from pixels; samplers provided for the respective output portions and configured to sample the signals output from the output portions of the solid-state imaging element; and a controller configured to vary, at the samplers, sampling timings at which the samplers sample the signals or to vary, at the output portions, output characteristics with which the output portions output the signals read from the pixels.

## Description

### BACKGROUND

The present disclosure relates to solid-state image capture devices and drive methods for solid-state image capture devices, and particularly relates to a technology applied to a solid-state image capture device having multiple channel outputs.

For solid-state image capture devices including solid-state imaging elements, such as charge-coupled devices (CCDs), there are demands for higher-speed reading of signals from pixels, in conjunction with increasing demands for high frame rates and an increasing number of pixels in the solid-state imaging elements. For example, as technology for preforming highspeed reading of signals from pixels, a technology for simultaneously reading pixel signals through multiple channels has been available. When simultaneous reading through multiple channels is performed, the reading speed improves. For example, when two-channel simultaneous reading is performed, the reading speed increases by a factor of two, assuming that the transfer rate in each of the channels is the same as that in a single-channel reading configuration.

Japanese Unexamined Patent Application Publication No. 2002-44530 discloses an example of a solid-state image capture device having a solid-state imaging element that performs two-channel simultaneous outputting.

### SUMMARY

Particular aspects and embodiments are set out in the appended claims.

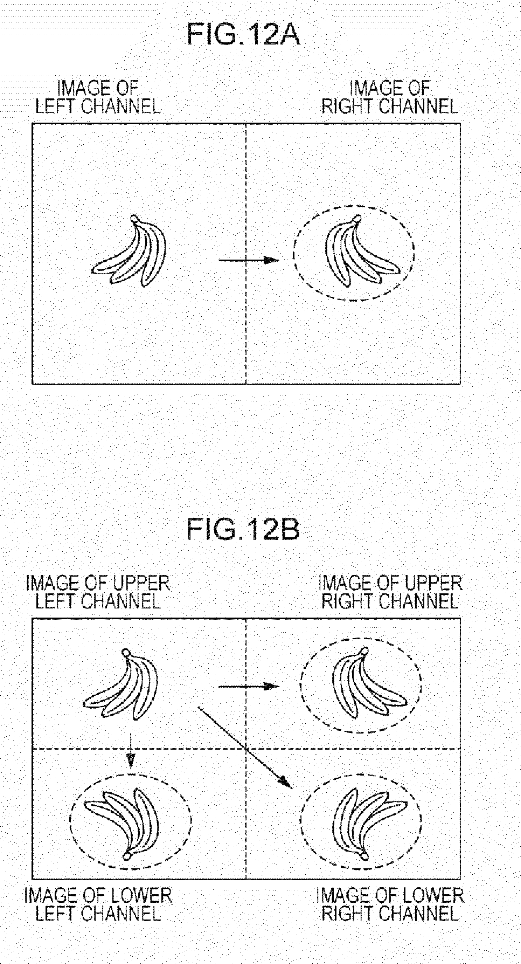

When simultaneous outputting is performed from a solid-state imaging element through multiple channels, there is a problem in that crosstalk occurs in signals read through the channels. Specifically, for example, as illustrated in Fig. 12A, when two-channel reading in which a left half and a right half of an image for one frame are simultaneously read through two individual channels, an object in the image of the left half appears horizontally flipped and less clearly in the image of the right half. As illustrated in Fig. 12B, when four-channel reading in which an image for one frame is divided into four images, namely, upper-left, upper-right, lower-left, and lower-right images, and the divided images are simultaneously read through four individual channels is performed, an object in the upper-left image appears vertically and/or horizontally flipped and less clearly in the other divided images.

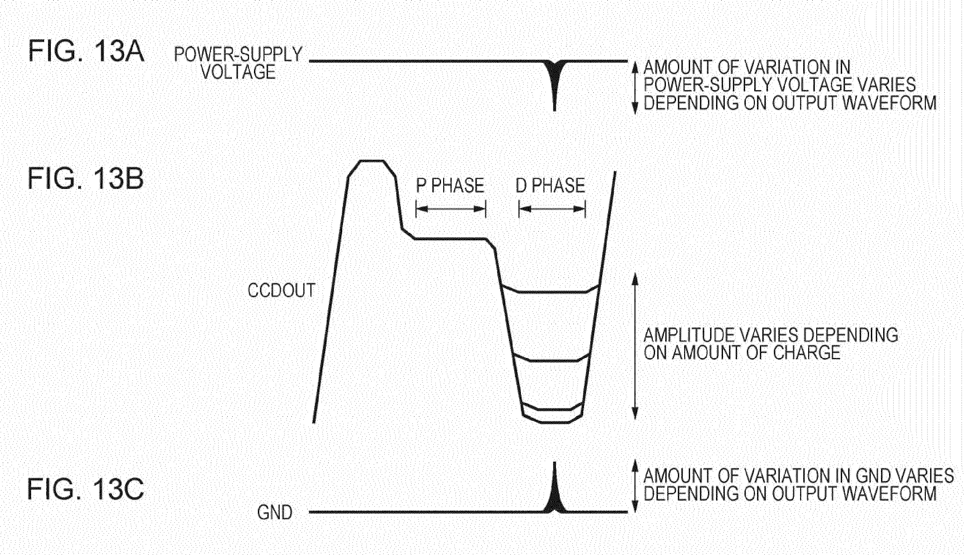

Crosstalk during such multi-channel simultaneous reading is caused by variations in power-supply voltages supplied to the solid-state imaging element. More specifically, for example, in the case of a CCD solid-state imaging element, a circuit that is external thereto samples voltages (Fig. 13B) output from the solid-state imaging element, when a power-supply voltage illustrated in Fig. 13A and a ground potential GND illustrated in Fig. 13C are given. During the sampling, a voltage at a D phase varies depending on the amount of charge accumulated in each pixel. Thus, as illustrated in Fig. 13B, the circuit external to the solid-state imaging element samples a voltage at a P phase and a voltage at the D phase and extracts a difference between the voltage at the P phase and the voltage at the D phase as one pixel signal.

In this case, as illustrated in Figs. 13A and 13C, the power-supply voltage and the ground potential GND vary temporarily depending on the amplitude of an output from the solid-state imaging element. The varied power-supply voltage and ground potential appear in an output image as crosstalk as illustrated in Figs. 12A and 12B.

As a method for reducing crosstalk during multi-channel simultaneous reading, for example, Japanese Unexamined Patent Application Publication No. 2002-44530 discloses a scheme in which a correction circuit including multipliers and adders is provided between circuits that sample and hold outputs from a solid-state imaging element and analog-to-digital conversion circuits. The correction circuit reduces crosstalk by adding correction signals resulting from multiplication of correction coefficients.

However, when such a correction circuit is provided, there are problems in that the circuit scale of the image capture device increases, the configuration thereof becomes complicated, and the power consumption increases. In particular, real-time correction involves an additional circuit, such as a memory, in addition to multipliers and adders, which complicates the configuration and increases the power consumption.

Since the multipliers and the adders are used to perform analog-signal processing, there is a problem in that the correction causes an increase in noise.

In addition, correction processing using analog signals also suffers a problem in that variations are likely to occur in individual correction circuits.

Accordingly, it is desirable to minimize the problem of crosstalk that occurs during multi-channel simultaneous reading of signals from pixels in a solid-state imaging element.

According to one embodiment of the present disclosure, there is provided a solid-state image capture device. The solid-state image capture device includes: a solid-state imaging element having output portions configured to output signals read from pixels; samplers provided for the respective output portions and configured to sample the signals output from the output portions of the solid-state imaging element; and a controller configured to vary, at the samplers, sampling timings at which the samplers sample the signals or to vary, at the output portions, output characteristics with which the output portions output the signals read from the pixels.

According to another embodiment of the present disclosure, there is provided a drive method for a solid-state image capture device. The method including: outputting, by output portions, signals read from pixels arranged in a solid-state imaging element; sampling, by samplers provided for the respective output portions, the signals output from the output portions; and varying, at the samplers, sampling timings at which the samplers sample the signals or varying, at the output portions, output characteristics with which the output portions output the signals read from the pixels.

With such an arrangement, the sampling timings at which the samplers sample signals read from the pixels or the output characteristics with which the output portions output the signals read from the pixels vary among the output systems. Accordingly, even when a power-supply voltage or a reference potential when one output portion outputs the signals read from the pixels is varied by an influence of the read signals, the variation does not affect sampling of signals in another output system.

According to the present disclosure, as result of changes in the output timings and the sampling timings or changes in the output characteristics, output signals of one channel does not affect signals of another channel. Thus, for a configuration having output portions for multiple channels, crosstalk can be reduced.

### BRIEF DESCRIPTION OF THE DRAWINGS

Examples and embodiments will now be described with reference to the accompanying drawings, in which:
Fig. 1 is a diagram illustrating an example of the configuration of a solid-state image capture device according to a first embodiment of the present disclosure;
Fig. 2 is a diagram illustrating another example of the configuration of the solid-state image capture device according to the first embodiment of the present disclosure;
Figs. 3A to 3C are waveform diagrams illustrating examples of drive pulses according to the first embodiment of the present disclosure;
Fig. 4 illustrates an example of the state of adjustment according to the first embodiment of the present disclosure;
Fig. 5 is a flowchart illustrating an example of adjustment processing according to the first embodiment of the present disclosure;
Figs. 6A to 6F illustrate an example of an output waveform and sampling timing according to the first embodiment of the present disclosure;
Figs. 7A to 7C are waveform diagrams illustrating an example of an output waveform and sampling timing (an example in which part of the waveform is shifted) according to the first embodiment of the present disclosure;
Fig. 8 is a diagram illustrating an example of a solid-state image capture device (an example of two-channel reading) according to a second embodiment of the present disclosure;
Fig. 9 is a diagram illustrating another example of the solid-state image capture device (an example of four-channel reading) according to the second embodiment of the present disclosure;
Figs. 10A to 10C are waveform diagrams illustrating an example of an output waveform and sampling timing according to the second embodiment of the present disclosure;
Fig. 11 is a diagram illustrating a modification of the solid-state image capture device (an example using filters) according to the second embodiment of the present disclosure;
Figs. 12A and 12B illustrate examples of occurrence of crosstalk among channels; and
Figs. 13A to 13C are waveform diagrams illustrating an example of an output waveform of a solid-state imaging element.

### DESCRIPTION

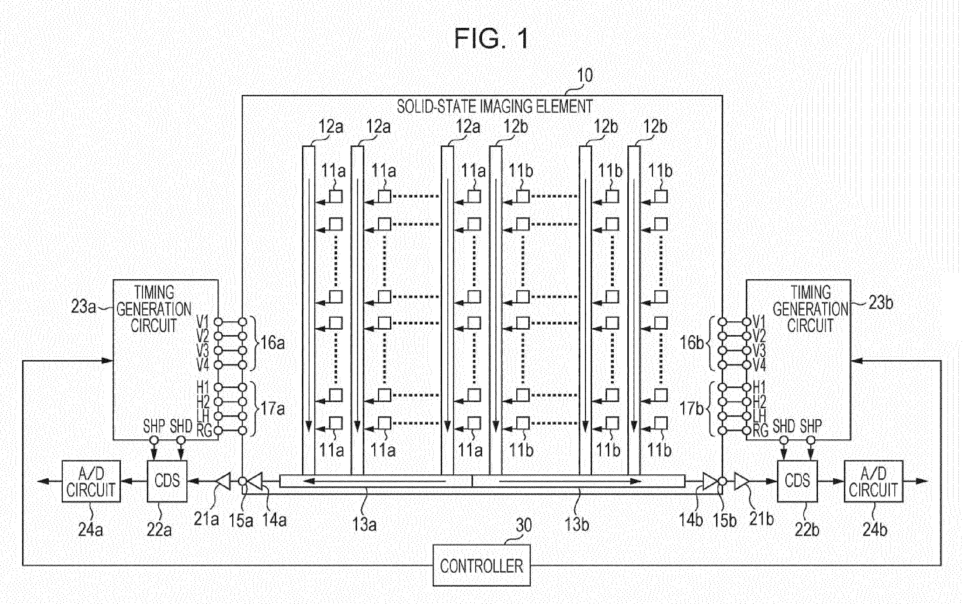

Fig. 1 is a diagram illustrating the configuration of a solid-state image capture device according to an example of a first embodiment of the present disclosure.

The solid-state image capture device illustrated in Fig. 1 includes a CCD solid-state imaging element 10 having an arrangement for performing two-channel reading. That is, voltage signals corresponding to charges accumulated in pixels 11a arranged in a left half of an imaging area are read from a first output terminal 15a, and voltage signals corresponding to charges accumulated in pixels 11 b arranged in a right half of the imaging area are also read from a second output terminal 15b.

The charges accumulated in the pixels 11a arranged in the left half of the imaging area are sequentially transferred to a buffer amplifier 14a via vertical transfer registers 12a and a horizontal transfer register 13a. The charges transferred to the buffer amplifier 14a are converted into voltages, which are output from the first output terminal 15a. The charge transfer is performed in synchronization with transfer pulses supplied from a timing generation circuit 23a. More specifically, the timing generation circuit 23a generates vertical transfer pulses V1, V2, V3, and V4, which are supplied to the vertical transfer registers 12a in the solid-state imaging element 10 via terminals 16a. The timing generation circuit 23a also generates horizontal transfer pulses H1 and H2, which are supplied to the horizontal transfer register 13a in the solid-state imaging element 10 via terminals 17a. An LH pulse and an RG pulse are also supplied from the timing generation circuit 23a to the solid-state imaging element 10 via terminals 17a. The LH pulse is a drive pulse for determining timing at a last transfer stage in the horizontal direction, and the RG pulse is a drive pulse for determining timing at which an output of each pixel 11a is reset.

The charges accumulated in the pixels 11b arranged in the right half of the imaging area are sequentially transferred to a buffer amplifier 14b via vertical transfer registers 12b and a horizontal transfer register 13b. The charges transferred to the buffer amplifier 14b are converted into voltages, which are output from the second output terminal 15b. The charge transfer is performed in synchronization with transfer pulses supplied from a timing generation circuit 23b. That is, transfer pulses and drive pulses generated by the timing generation circuit 23b and supplied to terminals 16b and 17b are analogous to those of the timing generation circuit 23a.

The signals of the respective pixels which are output from the output terminal 15a are supplied to a correlated double sampling (CDS) circuit 22a via a buffer amplifier 21 a. The CDS circuit 22a samples signals in accordance with an SHP pulse and an SHD pulse generated by the timing generation circuit 23a. The CDS circuit 22a then outputs a difference between voltages sampled in accordance with the two pulses.

The signals of the respective pixels which are output from the output terminal 15b are supplied to a CDS circuit 22b via a buffer amplifier 21 b. The CDS circuit 22b serves as a sampler that samples signals in accordance with an SHP pulse and an SHD pulse generated by the timing generation circuit 23b and outputs a difference between voltages sampled in accordance with the two pulses. Details of states of signal sampling performed by the CDS circuits 22a and 22b are described later.

The signals sampled by the CDS circuit 22a are supplied to an analog-to-digital (A/D) conversion circuit 24a, where the sampled signals are converted into digital data. The signals sampled by the CDS circuit 22b are also supplied to an analog-to-digital (A/D) conversion circuit 24b, where the sampled signals are converted into digital data.

The digital data resulting from the conversion performed by the two analog-to-digital conversion circuits 24a and 24b are supplied to a captured-image data processing unit (not illustrated), where the digital data are combined into an image for one frame, so that image data having a predetermined format is generated.

The timings at which the transfer pulses and drive pulses are generated by the timing generation circuits 23a and 23b are adjusted in accordance with instructions from a controller 30.

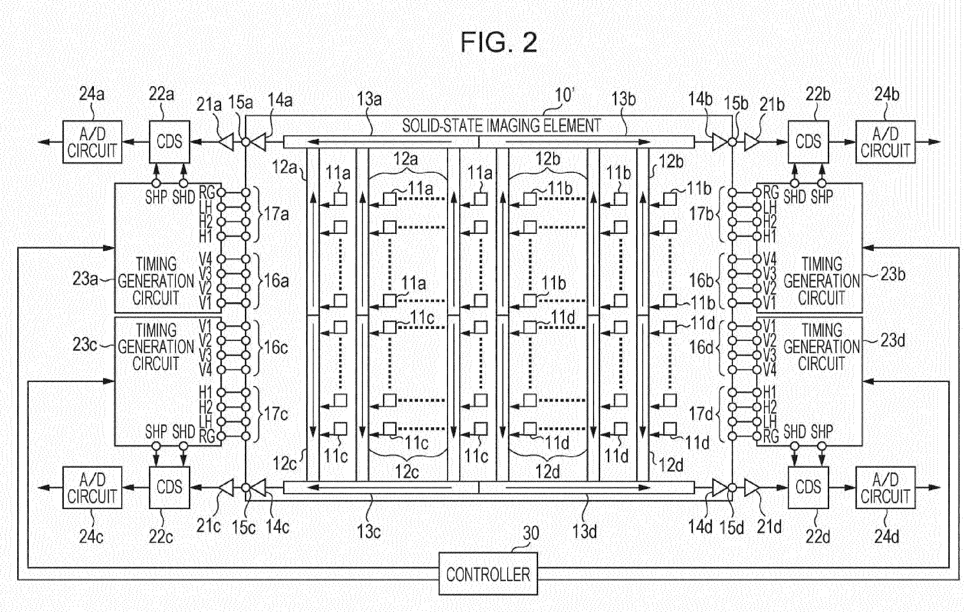

A CCD solid-state imaging element 10' illustrated in Fig. 2 is an example of a solid-state image capture device which has an arrangement for performing four-channel reading. That is, voltage signals corresponding to charges accumulated in pixels 11a provided at the upper left in an imaging area are read from a first output terminal 15a. Voltage signals corresponding to charges accumulated in pixels 11 b provided at the upper right in the imaging area are read from a second output terminal 15b. Voltage signals corresponding to charges accumulated in pixels 11c provided at the lower left in the imaging area are read from a third output terminal 15c. Voltage signals corresponding to charges accumulated in pixels 11 d provided at the lower right in the imaging area are read from a fourth output terminal 15d.

In Fig. 2, transfer registers, output terminals, and circuits for the four channels are provided in order to read signals in the pixels 11a, 11 b, 11c, and 11d in the four channels. In the example of the two-channel solid-state imaging element 10 illustrated in Fig. 1, the transfer registers, the output terminals, and the circuits for the two channels are denoted by a and b. In contrast, in the example of the four-channel solid-state imaging element 10' illustrated in Fig. 2, the transfer registers, the output terminals, and the circuits for the four channels are denoted by a, b, c, and d. The constituent elements included in each channel illustrated in Fig. 2 are substantially the same as those illustrated in the example in Fig. 1. Transfer pulses and drive pulses generated by timing generation circuits 23a, 23b, 23c, and 23d for the respective channels are also analogous to those described above and illustrated in the example in Fig. 1. The timings at which the transfer pulses and the drive pulses are generated by the four timing generation circuits 23a, 23b, 23c, and 23d are also adjusted in accordance with instructions from the controller 30, as in the example in Fig. 1.

The following description is given of an example in which the present disclosure is applied to the four-channel solid-state imaging element 10'.

Now, a description will be given of a state in which the CDS circuits 22a, 22b, 22c, and 22d included in the solid-state image capture device according to the example of the present embodiment perform sampling in accordance with drive pulses such as the corresponding SHP pulses and SHD pulses supplied from the timing generation circuits 23a, 23b, 23c, and 23d.

In this case, a description will be given of a state in which the CDS circuit 22a performs sampling in accordance with the pulses generated by the timing generation circuit 23a for one channel.

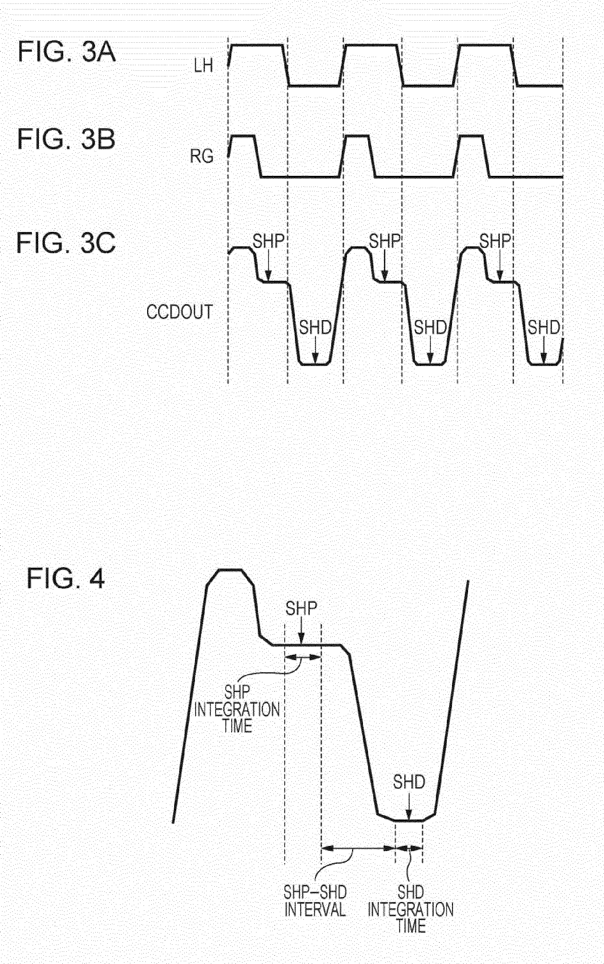

Figs. 3A to 3C illustrate relationships among the LH pulse (Fig. 3A) and RG pulse (Fig. 3B) generated by the timing generation circuit 23a and a signal waveform CCDOUT (Fig. 3C) output from the output terminal 15a in the solid-state imaging element 10'.

The LH pulse is a drive pulse for the last stage in the horizontal transfer register 13a. The LH pulse has a phase that is the same as that of the horizontal transfer pulse H1 and that is opposite to that of the horizontal transfer pulse H2. The timing at which the signal waveform CCDOUT varies is defined by the timings of the LH pulse and the RG pulse.

That is, the output waveform CCDOUT illustrated in Fig. 3C has, for each pixel, a period of a P phase indicating a level that serves as a reference and a period of a D phase indicating a level corresponding to the amount of accumulated charge. As illustrated in Fig. 3C, a signal at the P phase is sampled in accordance with the SHP pulse, and a signal at the D phase is sampled in accordance with the SHD pulse. This sampling operation is performed for each pixel. The timings denoted by arrows with SHP and SHD in Fig. 3C are the timings at which the SHP pulse and SHD pulse are generated, respectively.

In this case, the LH pulse illustrated in Fig. 3A defines the timing at which the output waveform changes from the P phase and the D phase. The LH pulse makes it possible to adjust the duration of the P phase and the duration of the D phase.

The RG pulse is a reset pulse for the pixel, and when the RG pulse is input, the output waveform CCDOUT is reset to that of a reference voltage in the solid-state imaging element 10' and changes to the P phase that serves as a reference for the next pixel.

Fig. 4 illustrates more details of one period of the output waveform CCDOUT for one pixel.

The output waveform CCDOUT is sampled in an integration time having a certain range, not at one point in time, for each of the SHP pulse and the SHD pulse. That is, as illustrated in Fig. 4, signals are sampled in an integration time set by the SHP pulse and an integration time set by the SHD pulse.

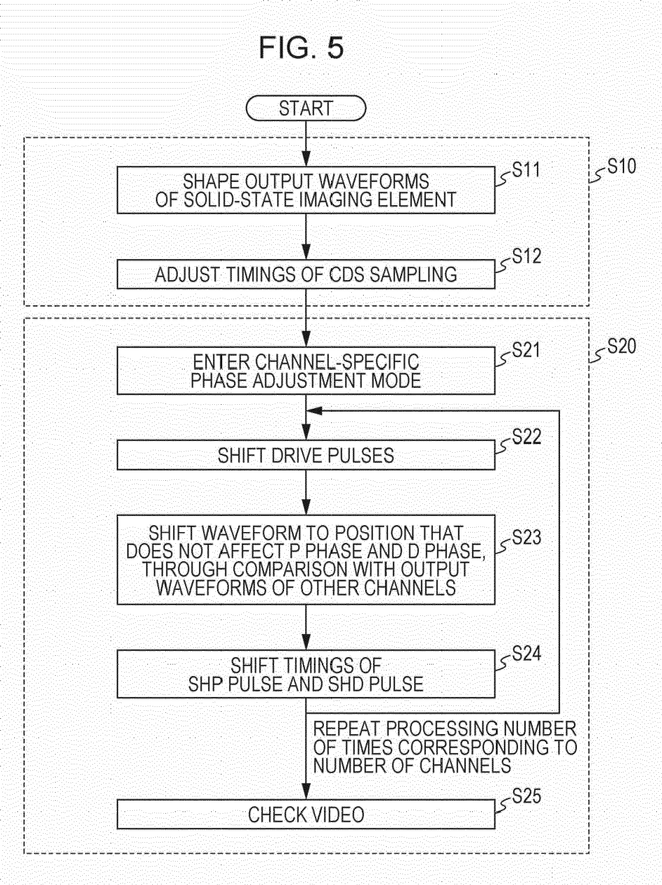

Next, an example of processing for adjusting the solid-state image capture device according to an example of the present embodiment will be described with reference to the flowchart in Fig. 5.

This adjustment processing is performed, for example, in an adjustment process after manufacture and before shipment of the solid-state image capture device. During the adjustment processing, the controller 30 may determine the sampling state of signals and so on. Alternatively, an external adjusting apparatus (not illustrated) may be coupled to the solid-state image capture device to detect the sampling state of signals and to issue an instruction to the controller 30.

The process in which the adjustment processing is performed involves phase adjustment processing (step S10) for the entire solid-state image capture device and phase adjustment processing (step S20) for individual channels.

First, in step S10, the phase adjustment processing for the entire solid-state image capture device is performed. In step S11, the controller 30 adjusts the timings of the pulses generated by the timing generation circuits 23a, 23b, 23c, and 23d and performs processing for shaping the outputs waveforms of the solid-state imaging element. As a result of the shaping processing, each output waveform CCDOUT becomes an optimum signal waveform like that illustrated in Figs. 3C and 4.

Next, in step S12, the controller 30 adjusts the timings at which the CDS circuits 22a, 22b, 22c, and 22d perform sampling in accordance with the SHP pulses and the SHD pulses.

This phase adjustment processing for the entire solid-state image capture device may be processing performed in a typical adjustment process.

After step S12, the process proceeds to step S20 in which the phase adjustment processing for the individual channels is performed. This phase adjustment processing for the individual channels is performed in order to avoid crosstalk among the channels.

First, in step S21, the process enters a channel-specific phase adjustment mode for adjusting one of the channels. When the channel to be adjusted is determined, drive pulses for that channel are shifted to set an optimum pulse timing in step S22. More specifically, the H1, H2, LH, and RG pulses generated by the timing generation circuit for the channel to be adjusted may be displaced without changing the phase relationship thereof (this is an example in which the entire wave waveform is shifted). With such an arrangement, the waveform shifting is performed without deforming the shaped waveforms. The phase of the LH pulse may also be displaced (this is an example in which part of the waveform is shifted). With such an arrangement, a D-phase portion of the waveform is displaced.

In step S23, through comparison with the output waveforms of other channels, the controller 30 shifts the waveform to a position that does not affect sampling of the P phase and the D phase. In step S24, the controller 30 further shifts the timings of the SHP pulse and the SHD pulse so that the P phase and D phase of the shifted waveform are sampled.

When the processing up to this point is finished and any channel that has not been adjusted remains, the process returns to step S22, and the controller 30 performs adjustment for a channel that has not been adjusted.

When adjustment of all of the channels is completed, for example, an operator who monitors the adjustment work checks output video in step S25, and the processing ends. In this example of the present embodiment, the timings at which the charges are read from the pixels in the solid-state image capture device and the timings at which the charges in the pixels are transferred via the vertical transfer registers are the same for all of the channels.

Next, a description will be given of a specific example of the waveform-shifting processing performed in step S23 in the flowchart in Fig. 5.

The CDS circuit outputs a difference between the sampled voltages of the P phase and the D phase. Thus, it is desired that the amount of displacement be adjusted so that, ideally, the timings at which voltages at a power source and a ground potential GND vary are in the period in which the output waveform changes from the P phase to the D phase and in a reset period in which a reset is performed for the next pixel, avoiding the range in which the P phases and the D phases of the output waveforms of other channels are sampled. With such an arrangement, it is possible to avoid an adverse effect that the sampling of an output waveform in one channel has on the sampling in other channels.

When the output waveform is displaced so that an appropriate timing is reached, the phases to be sampled in accordance with the SHP pulse and the SHD pulse are also shifted as in step S24 and adjustment is performed so that appropriate video information is obtained from the displaced waveforms. In this case, as illustrated in Fig. 4, the outputs of the solid-state imaging element are sampled in an integration time having a certain range, not at one point in time, for each of the SHP pulse and the SHD pulse. The integration time varies depending on the configuration of the solid-state image capture device.

Next, a description will be given of an example of an appropriate way of displacing the waveforms.

For example, the solid-state image capture device is adapted to be able to shift each drive pulse in increments of a 1/N clock, where N indicates the resolution of the timing generation circuits 23a, 23b, 23c, and 23d. It is assumed that, when the outputs of the channels occur at the same timing, the timing at which the power source or the ground potential GND varies lies at substantially the center of the time in which the D phase is integrated using the SHD pulse.

In this case, when adjustment is performed in increments of the 1/N clock to displace the waveform by an amount greater than or equal to "Integration time at D phase /2", it is possible to avoid crosstalk. However, when the waveform is excessively displaced, the timing of variations in the power source or the ground potential GND is displaced into the integration time at the P phase, so that the waveform is affected by crosstalk. That is, it is important that the waveform be displaced so that the timing of variations in the power source or the ground potential GND are not displaced into the range in the integration time at the P phase and the integration time at the D phase. The "variations in the power source or the ground potential GND" refers to temporary voltage variations that occur during output from other channels, as described above with reference to Figs. 13A to 13C.

Thus, when the interval between the end time of the integration time at the P phase and the start time of the integration time at the D phase is defined as an SHP-SHD interval, as illustrated in Fig. 4, the amount of displacement can ideally be defined as:
("Integration time at D phase" /2) < Amount of Displacement < SHP-SHD Interval.

Performing this operation a number of times corresponding to the number of output channels of the solid-state imaging element and checking the video information output in step S25 in the flowchart in Fig. 5 makes it possible to avoid crosstalk among all channels.

Next, a description will be given of an example of an output waveform and a specific shift state of sampling timing.

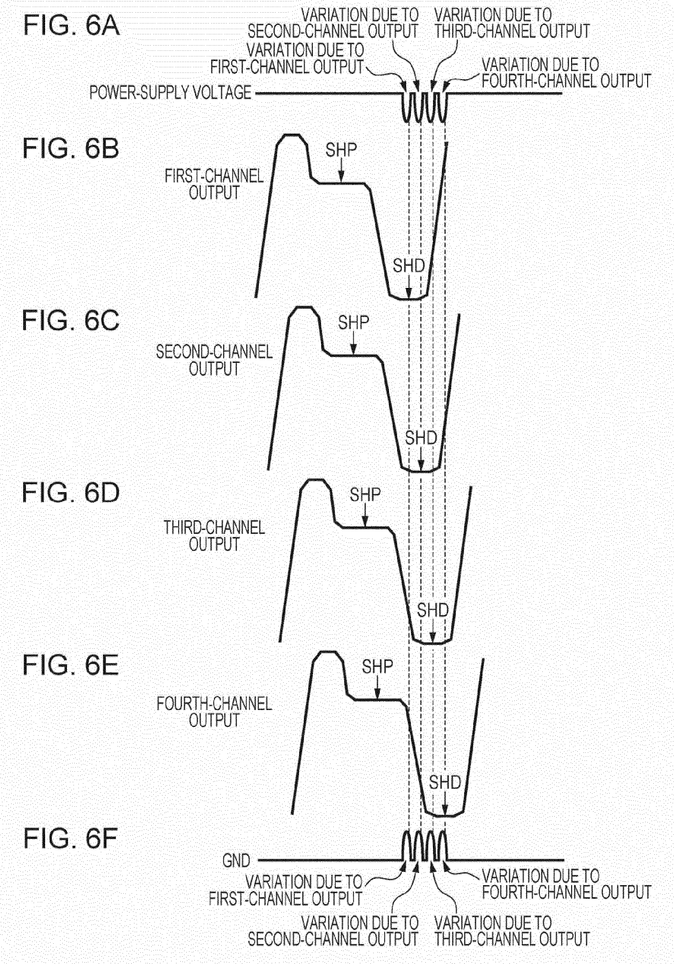

Figs. 6A to 6F illustrate an example in which the entire output waveform is shifted. Fig. 6A illustrates a power-supply voltage for driving the solid-state image capture device, and Fig. 6F illustrates a ground potential GND. Figs. 6B to 6E illustrate respective output waveforms of four channels. The output waveforms of the four channels are illustrated in Figs. 6B to 6E as being the same. In practice, however, the level at the D phase varies depending on the amount of charge accumulated in each pixel.

In this example, as illustrated in Figs. 6B to 6E, the output waveforms of the four channels are sequentially shifted at substantially the regular intervals, and the timings at which the SHP pulses and the SHD pulses are generated are also shifted in the same manner.

As a result of such shifting, variations due to the outputs of the channels appear individually at the power-source voltage illustrated in Fig. 6A. Variations due to the outputs of the channels also appear individually at the ground potential GND illustrated in Fig. 6F.

For example, a first-channel output waveform illustrated in Fig. 6B is set so that it is affected in a period from the D phase to before the reset period by variations in the power source and the ground potential GND, the variations being caused by the other channels. In addition, for example, a fourth-channel output waveform illustrated in Fig. 6E is set so that it is affected, in the period in which the output waveform changes from the P phase to the D phase, by variations in the power source and the ground potential GND. Since no sampling is typically performed in the period in which the output waveform changes from the P phase to the D phase, it is possible to avoid crosstalk due to an influence of variations in the power source and the ground potential GND.

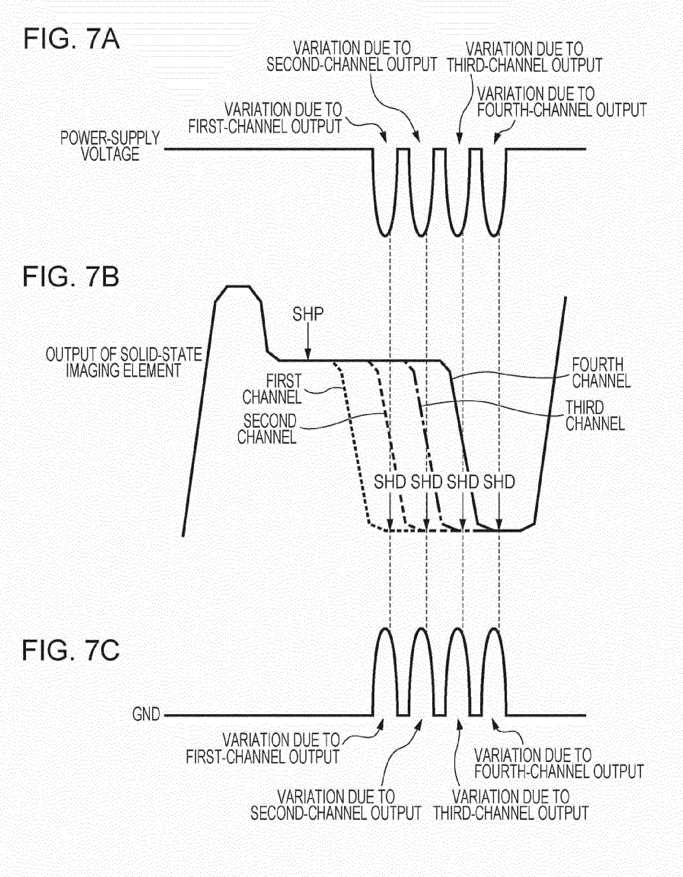

Figs. 7A to 7C illustrate an example in which only part of the output waveform is shifted. Fig. 7A illustrates a power-supply voltage for driving the solid-state image capture device, and Fig. 7C illustrates a ground potential GND. Fig. 7B illustrates the output waveforms of the four channels in a superimposed manner.

In this example, as illustrated in Fig. 7B, the waveforms of four channels CH1, CH2, CH3, and CH4 are sequentially shifted in only the periods in which the output waveforms change from the P phases to the D phases. That is, the reset periods for the respective channels are set at the same timing, and only the periods in which the output waveforms change from the P phases to the D phases are shifted. Thus, the timings of the RG pulses for defining the reset periods are set to be the same for all of the channels, and the timings of the LH pulses for defining the periods in which the output pulses change from the P phases to the D phases are set to be the timings shifted for the respective channels.

Also, the timings of the SHP pulses for sampling the P phases are also set to the same timing for all of the channels. The timings of the SHD pulses for sampling the D phases are set to the timings shifted for the respective channels.

In this example, variations due to the outputs of the channels also appear individually at the power-source voltage illustrated in Fig. 7A. Variations due to the outputs of the channels also appear individually at the ground potential GND illustrated in Fig. 7C.

That is, the timings at which the D phases are sampled differ among the channels. As a result, during sampling for each channel, it is possible to avoid the influence of other channels, thus making it possible to avoid crosstalk due to the influence of variations in the power source and the ground potential GND.

As described above, according to the example of the first embodiment of the present disclosure, it possible to avoid crosstalk among the channels by displacing the timings of outputs of the solid-state imaging element. The processing in the example of the first embodiment involves only shifting the timings at which the pulses are generated and can be implemented with a simple configuration without any additional circuit.

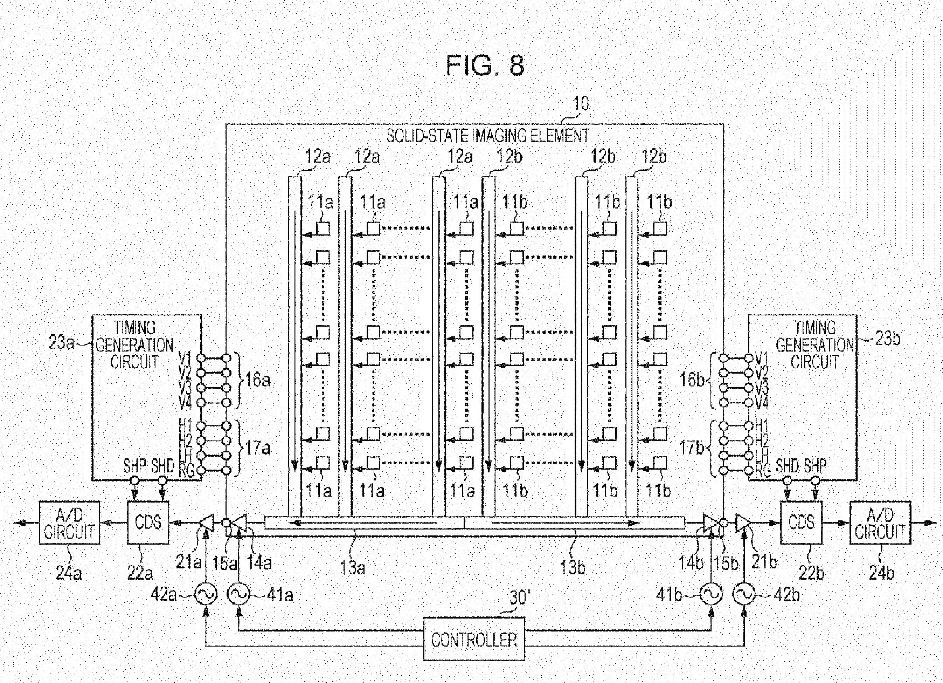

Next, an example of a second embodiment of the present disclosure will be described with reference to Figs. 8 to 11. In Figs. 8 to 11, portions and units corresponding to those described in the example of the first embodiment and illustrated in Figs. 1 to 7C are denoted by the same reference numerals.

A CCD solid-state imaging element 10 illustrated in Fig. 8 has an arrangement for performing two-channel reading.

The solid-state imaging element 10 illustrated in Fig. 8 is different from the example illustrated in Fig. 1 in that a controller 30' controls current sources 41 a, 41 b, 42a, and 42b that supply power to buffer amplifier 14a, 14b, 21 a, and 21 b coupled to corresponding prior and subsequent stages of output terminals 15a and 15b. By controlling the current sources 41 a, 41 b, 42a, and 42b, the controller 30' varies, in the respective channels, transition times (slew rates) in which the output waveforms of the respective channels change from the P phases to the D phases.

Other portions and units illustrated in Fig. 8 are substantially the same as those in the example illustrated in Fig. 1. In the example in Fig. 8, however, processing for shifting the drive pulses for each channel is not performed.

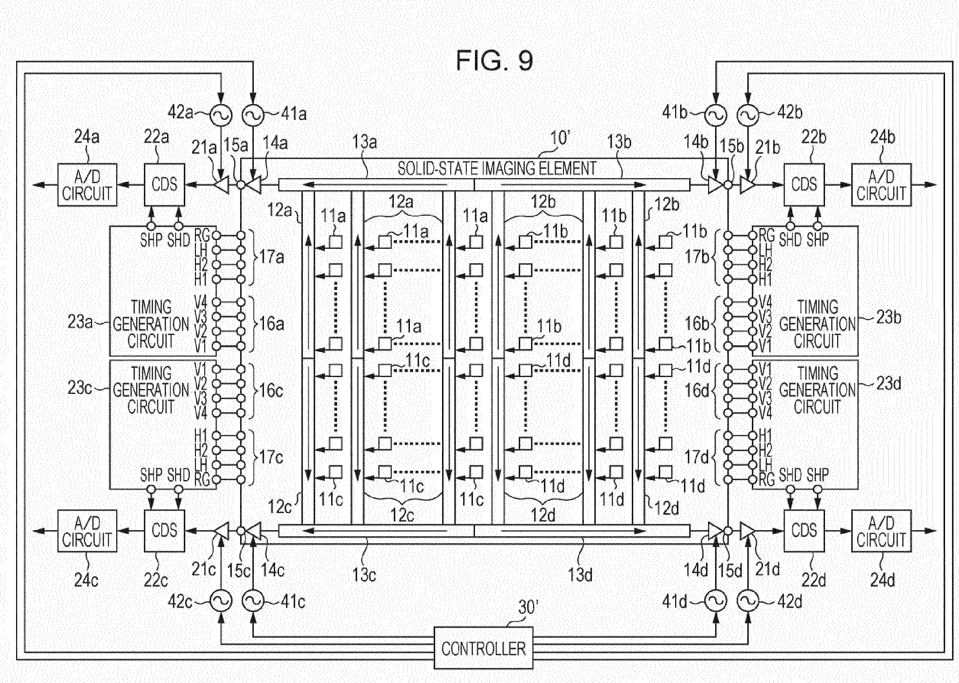

A CCD solid-state imaging element 10' illustrated in Fig. 9 has an arrangement for performing four-channel reading.

The solid-state imaging element 10' illustrated in Fig. 9 is different from the example in Fig. 2 in that a controller 30' controls current sources 41 a, 41 b, 41 c, 41 d, 42a, 42b, 42c, and 42d that supply power to buffer amplifiers 14a, 14b, 14c, 14d, 21a, 21b, 21c, and 21 d coupled to corresponding prior and subsequent stages of output terminals 15a, 15b, 15c, and 15d. By controlling the current sources 41 a, 41 b, 41 c, 41 d, 42a, 42b, 42c, and 42d, the controller 30' varies, in the respective channels, the transition times (slew rates) in which the output waveforms change from the P phases to the D phases.

Other portions and units in Fig. 9 are substantially the same as those in the example illustrated in Fig. 2. In the example in Fig. 9, however, processing for shifting the drive pulses for each channel is not performed.

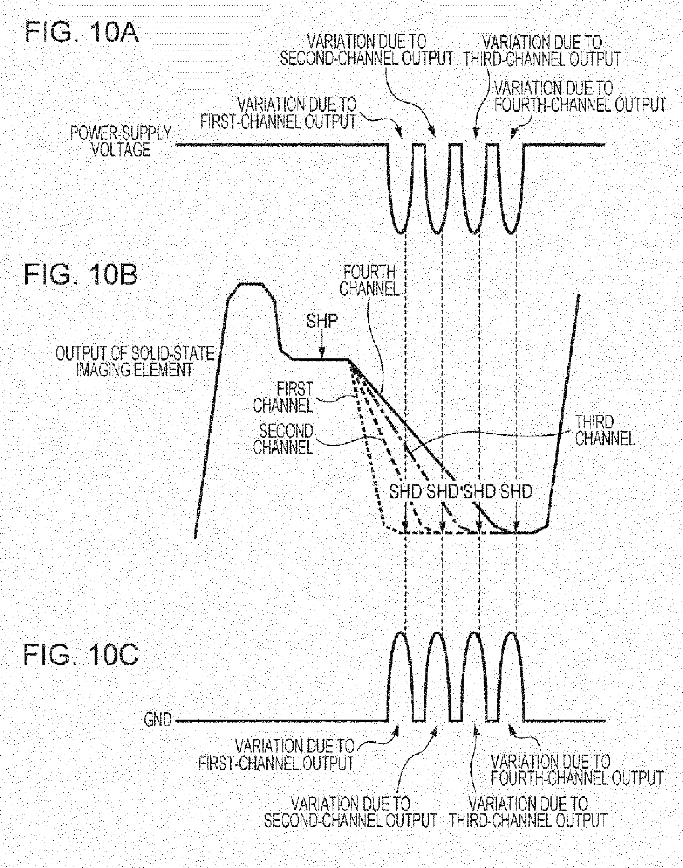

Next, a specific example in which the transition times in which the output waveforms change from the P phases to the D phases are varied for the respective channels will be described with reference to Figs. 10A to 10C. The example illustrated in Figs. 10A to 10C is an example in which the present disclosure is applied to the four-channel solid-state imaging element 10' illustrated in Fig. 9.

Fig. 10A illustrates a power-supply voltage for driving the solid-state image capture device, and Fig. 10C illustrates a ground potential GND. Fig. 10B illustrates the output waveforms of the four channels in a superimposed manner.

As described above, the controller 30' varies the drive currents by controlling the current sources 41 a to 41 d and 42a to 42d coupled to the buffer amplifiers 14a to 14d and 21 a to 21 d coupled to the corresponding prior and subsequent stages of the output terminals 15a to 15d in the corresponding channels. Varying the drive currents in such a manner makes it possible to adjust the transition times in which the output waveforms change from the P phases to the D phases. That is, when the drive current is increased, the slew rate increases, and when the drive current is reduced, the slew rate decreases.

By performing such adjustment, the controller 30' makes the slew rates in the four channels different from each other, as illustrated in Fig. 10B. For example, the controller 30' sets the slew rate in a first channel CH1 to be the highest, and reduces the slew rates in a second channel CH2, a third channel CH3, and a fourth channel CH4 in that order.

The timings at which the P phases are sampled in accordance with the SHP pulses are set to the same among the channels, and the timings at which the D phases are sampled in accordance with the SHD pulses are set to be different among the channels. The timings at which the D phases are sampled are set to timings that are different from the periods in which the power sources and the ground potentials GND vary by variations in the output waveforms of the other channels.

As a result of performing the processing in the manner described above, the timings at which the D phases are sampled differ from each other among the channels, and during sampling for each channel, it is possible to avoid an influence of other channels to thereby make it possible to avoid crosstalk, as in the example described above and illustrated in Figs. 7A to 7C.

The examples in Figs. 8 and 9 have been directed to examples in which the buffer amplifier 14a to 14d and 21 a to 21 d are coupled to the corresponding prior and subsequent stages of the output terminals 15a to 15d in the channels and the controller 30' controls the drive currents for the buffer amplifiers. Alternatively, the controller 30' may vary the slew rates by controlling only the drive currents for the buffer amplifiers at either the prior stages or the subsequent stages of the output terminals 15a to 15d.

Circuits other than the buffer amplifiers may adjust the slew rates. That is, output circuits coupled to the output terminals of the solid-state imaging element are provided in order to aid outputting of the solid-state imaging element, and a variety of circuit architectures may be employed for the output circuits. For example, the solid-state imaging element may have, at output portions thereof, filters for limiting the bands, other than the buffer amplifiers. The buffer amplifiers may also be implemented by various types of amplifiers, such as class-A amplifiers that constantly supply current and class-AB amplifiers that supply current only in the presence of signals. That is, depending on the configuration of the output circuits used, setting is to be performed so as to appropriately adjust the slew rates. Next, a description will be given of an example using filters.

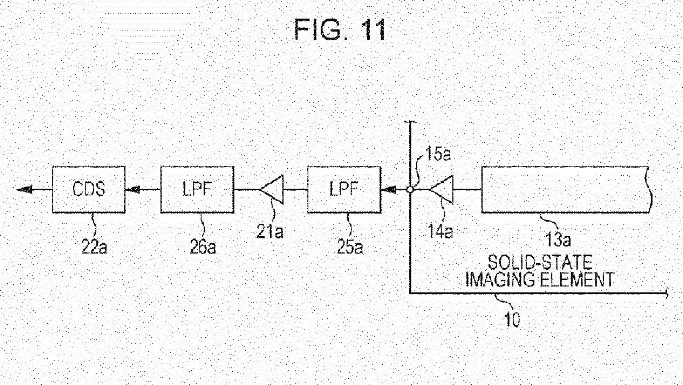

Fig. 11 illustrates an example in which low-pass filters 25a and 26a are coupled to the output terminal 15a in the solid-state imaging element 10.

That is, the processing in which a signal obtained at the last stage in the horizontal transfer register 13a is supplied to the output terminal 15a via the buffer amplifier 14a is analogous to the processing performed by the configuration illustrated in Fig. 1.

The signal obtained at the output terminal 15a is adapted to be supplied to the CDS circuit 22a via the low-pass filter 25a, the buffer amplifier 21a, and the low-pass filter 26a.

Although the configuration for only the first channel is illustrated in Fig. 11, portions for other channels are also configured in the same manner.

In the configuration illustrated in Fig. 11, the time constant(s) of element(s) included in at least one of the low-pass filters 25a and 26a are adjusted to set the slew rate to an optimum value. Thus, in the case in Fig. 11, the time constant(s) of the low-pass filter(s) are varied for each channel.

The processing for setting the time constant(s) of the low-pass filter(s) illustrated in Fig. 11 and the above-described processing for setting the drive currents for the buffer amplifier may be combined to adjust the slew rate for each channel. Although a case in which a circuit externally coupled to the solid-state imaging element 10 adjusts the slew rate has been described in the case of the configuration illustrated in Fig. 11, a circuit for adjusting the slew rate may also be provided inside the solid-state imaging element 10.

In the example of each embodiment described above, the signal waveforms of a solid-state imaging element that performs simultaneous four-channel output have been described as specific signal waveforms by way of example. In contrast, for a solid-state imaging element that performs two-channel simultaneous output, the implementation can be realized by varying the timings or slew rates in two channels, as described above.

In addition, in the example of the signal waveforms, the output waveforms of all channels are shifted in the example of the signal waveforms. Alternatively, for example, when crosstalk appears prominently between specific two or three channels of the four channels, only the output waveforms of the specific two or three channels may be varied. In addition, although the timings and the slew rates are sequentially varied for the four channels in the illustrated examples, the order of shifting is also not limited to the illustrated examples.

Also, the processing for shifting the sampling timings, the processing being described in the example of the first embodiment, and the processing for adjusting the slew rates for the channels, the processing being described in the example of the second embodiment, may also be combined together.

In addition, in the example of each embodiment described above, the description has been given of an example in which the present disclosure is applied to an image capture device having a CCD solid-state imaging element. Alternatively, the processing for varying the sampling timings and/or the slew rates, the processing being described in the examples hereinabove, may also be applied to an image capture device having another type of solid-state imaging element, such as a metal-oxide semiconductor (MOS) solid-state imaging element.

In so far as the example embodiments described above are implemented, at least in part, using software-controlled data processing apparatus, it will be appreciated that a computer program providing such software control and a transmission, storage or other medium by which such a computer program is provided are envisaged as aspects of the present disclosure.

Therefore, viewed from one perspective, there has been described a solid-state image capture device that includes: a solid-state imaging element having output portions configured to output signals read from pixels; samplers provided for the respective output portions and configured to sample the signals output from the output portions of the solid-state imaging element; and a controller configured to vary, at the samplers, sampling timings at which the samplers sample the signals or to vary, at the output portions, output characteristics with which the output portions output the signals read from the pixels

The present disclosure can also employ a configuration as follows.
(1) A solid-state image capture device, including: a solid-state imaging element having output portions configured to output signals read from pixels; samplers provided for the respective output portions and configured to sample the signals output from the output portions of the solid-state imaging element; and a controller configured to vary, at the samplers, sampling timings at which the samplers sample the signals or to vary, at the output portions, output characteristics with which the output portions output the signals read from the pixels.
(2) The solid-state image capture device according to (1), wherein the samplers perform sampling in periods in which levels that serve as references are obtained and samples levels corresponding to charges accumulated in the pixels; and the controller varies, at the samplers, timings at which the levels corresponding to the charges accumulated in the pixels are sampled.
(3) The solid-state image capture device according to (2), wherein the controller further varies, at the samplers, timings at which the levels that serve as references are sampled.
(4) The solid-state image capture device according to one of (1) to (3), wherein the controller varies the output characteristics with which the output portions output the signals read from the pixels, by varying drive currents at the output portions.
(5) The solid-state image capture device according to (4), wherein the drive currents are drive currents supplied to amplifiers included in the output portions.
(6) The solid-state image capture device according to (4) or (5), wherein the controller varies the output characteristics at the output portions by varying characteristics of filters included in the corresponding output portions.
(7) A drive method for a solid-state image capture device, the method including: outputting, by output portions, signals read from pixels arranged in a solid-state imaging element; sampling, by samplers provided for the respective output portions, the signals output from the output portions; and varying, at the samplers, sampling timings at which the samplers sample the signals or varying, at the output portions, output characteristics with which the output portions output the signals read from the pixels.

It should be understood by those skilled in the art that various modifications, combinations, sub-combinations and alterations may occur depending on design requirements and other factors insofar as they are within the scope of the appended claims or the equivalents thereof.

## Claims

1. A solid-state image capture device, comprising:
a solid-state imaging element having output portions configured to output signals read from pixels;
samplers provided for the respective output portions and configured to sample the signals output from the output portions of the solid-state imaging element; and
a controller configured to vary, at the samplers, sampling timings at which the samplers sample the signals or to vary, at the output portions, output characteristics with which the output portions output the signals read from the pixels.

2. The solid-state image capture device according to claim 1, wherein
the samplers perform sampling in periods in which levels that serve as references are obtained and samples levels corresponding to charges accumulated in the pixels; and
the controller varies, at the samplers, timings at which the levels corresponding to the charges accumulated in the pixels are sampled.

3. The solid-state image capture device according to claim 2, wherein the controller further varies, at the samplers, timings at which the levels that serve as references are sampled.

4. The solid-state image capture device according to any preceding claim, wherein the controller varies the output characteristics with which the output portions output the signals read from the pixels, by varying drive currents at the output portions.

5. The solid-state image capture device according to claim 4, wherein the drive currents are drive currents supplied to amplifiers included in the output portions.

6. The solid-state image capture device according to claim 4 or 5, wherein the controller varies the output characteristics at the output portions by varying characteristics of filters included in the corresponding output portions.

7. A drive method for a solid-state image capture device, the method comprising:
outputting, by output portions, signals read from pixels arranged in a solid-state imaging element;
sampling, by samplers provided for the respective output portions, the signals output from the output portions; and
varying, at the samplers, sampling timings at which the samplers sample the signals or varying, at the output portions, output characteristics with which the output portions output the signals read from the pixels.
